# EUROPEAN PATENT APPLICATION

(11) **EP 2 354 376 A2**
(43) Date of publication of application: **10.08.2011**
(21) Application number: 11152071.4
(22) Date of filing: 25.01.2011
(51) Int. Cl.: E04G 23/02

(54) **Reinforcement plate**

(30) Priority: 27.01.2010 GB 1001318
(71) Applicant: Illinois Tool Works, Glenview, Illinois 60025 (US)
(72) Inventor: McAndrew, Scott, Glenrothes, Fife KY7 6QS (GB)
(74) Representative: Murgitroyd, George Edward

(57) **Abstract**

Dimensional lumber joist assembly comprising a dimensional lumber joist (12), weakened by the removal of a portion of its volume, and a reinforcement plate (10) attached thereto; the reinforcement plate (10) comprising a sheet-like material having a central opening therein aligned with the weakened portion of the joist, a plurality of elongate punch nail holes (60) through the material connecting the plate (10) to the timber (12) and characterised in that: at least a first elongate punch nail hole (60a) is arranged at an angle with respect to at least a second elongate punch nail hole (60b).

## Description

The present invention relates to the reinforcement of structural members used in the building and construction industry. In particular, the invention provides a reinforcement plate for strengthening a dimensional lumber joist locally weakened by the removal of a portion of its volume.

It is common practice in the building and construction industry to provide structural wooden joists with portions of material removed to form passages, recesses or cut-out portions, thus facilitating the convenient routing of utilities such as piping, wiring and the like. Such an arrangement allows utilities to be concealed within, for example, the floor substructure thus saving space and providing a more aesthetically appealing finish.

An inherent consequence of removing material from a wooden joist, for the purpose of accommodating utilities, is that its overall load bearing capacity is reduced. To obviate the need to employ larger and thus more expensive joists to compensate for any predicted reductions in load bearing capacity, it is known in the industry to apply reinforcing brackets or plates to the joist in localised regions where material has been removed.

A recognised disadvantage associated with forming passages, recesses or cut-out portions in dry dimensional lumber joists is that the removal of material promotes a tendency for the joist to fracture or split along its grain. There has been a tendency within the building construction industry to utilise engineered lumber products such as l-joists or laminated veneer lumber (LVL) each of which exhibit high load bearing characteristics relative to their volume and weight whilst avoiding the aforementioned problem associated with grain lines in dimensional lumber joists. However, the process of manufacturing engineered lumber products is significantly more complicated as compared to dimensional lumber, and the use of some adhesives in engineered lumber can have an adverse environmental impact.

Dimensional lumber is a natural and renewable product and this, coupled with cost considerations, often means it is the preferred option for structural joists. It has become common practice to employ one-piece joist reinforcing brackets provided with a central opening to impart uninterrupted peripheral reinforcement adjacent a passage formed through the width of the joist. An example of a known reinforcing bracket of this type is disclosed in US 5,519,977 (Callahan). This bracket is provided with a base wall dimensioned to match the depth of a given wooden joist, the base wall having a central opening therein for accommodating a utility conduit. The base wall is positioned against one side of a joist and a pair of integral side walls extending perpendicularly thereto present upper and lower load bearing surfaces co-planar with the upper and lower surfaces of the joist to compensate for the loss of load bearing capacity resulting from the formation of transverse utility passage through the joist.

However, such reinforcing brackets of this type are necessarily large and bulky and thus heavier and more difficult to handle and transport. Furthermore, such brackets lack flexibility in terms of the size of their central openings and insofar as they are restricted to use on joists of a given depth in view of the requirement that their load bearing surfaces to align with the upper and lower surfaces of the joist.

A further disadvantage of such plates has been found in the type and arrangement of nail holes used. Prior art brackets tend to provide round holes through which standard nails are hammered through into the timber. Additionally, the holes are arranged in a regular pattern across the face of the plate. It has been found that a timber joist with an aperture there through having lines of weakness in both the horizontal axis, typically parallel with the grain of the timber, and the vertical axis, experienced through stress when the joist is connected to a further structural unit. When nailed in place, the regular pattern of holes, provides localised points of strength at the nails and uninterrupted horizontal and vertical lines of weakness between the nail holes across the timber. Thus when stress is placed on the joist by loading, bending or twisting, the timber splits at the lines of weakness.

It is therefore an object of the present invention to provide a reinforcement plate and a dimensional lumber joist assembly comprising the reinforcement plate attached to a dimensional lumber joist weakened by the removal of a portion of its volume which obviates or mitigates at least some of the disadvantages of the prior art.

According to a first aspect of the present invention there is provided a dimensional lumber joist assembly comprising a dimensional lumber joist, weakened by the removal of a portion of its volume, and a reinforcement plate attached thereto; the reinforcement plate comprising a sheet-like material having a central opening therein aligned with the weakened portion of the joist, a plurality of elongate punch nail holes through the material connecting the plate to the timber and characterised in that: at least a first elongate punch nail hole is arranged at an angle with respect to at least a second elongate punch nail hole.

In this way, the elongate punch nail holes support the lines of weakness in the joist, thereby increasing the strength of the joist around the weakened portion.

Preferably, the second elongate punch nail hole is substantially perpendicular to the first elongate punch nail hole.

In this way, the common vertical and horizontal lines of weakness are supported.

Preferably, a plurality of first elongate punch nail holes are arranged in lines across the plate such that a long axis of each punch nail hole is parallel to a long edge of the plate.

In this way, the plate can be formed using tooling currently used to form metal connectors for truss beams.

Preferably, the first elongate punch nail holes in adjacent lines are staggered with respect to each other.

In this way, support across the vertical lines of weakness is achieved.

Preferably, a plurality of second elongate punch nail holes are arranged in lines across the plate such that a long axis of each punch nail hole is parallel to a short edge of the plate.

In this way, the punch nail holes offer a chance to cross the lines of weakness.

Preferably, the second elongate punch nail holes in adjacent lines are staggered with respect to each other.

In this way, support across the horizontal lines of weakness is achieved.

Advantageously, further elongate punch nail holes are arranged at an angle to the first and/or second punch nail holes.

Such arrangements help prevent 'cross splitting' over the joist from the removed portion.

Preferably the long edges and the short edges of the plate form a polygon of four sides. The plate may be rectangular or square. Advantageously the opening is an aperture located substantially centrally on the plate. More preferably the aperture is circular in profile. The aperture may be elliptical. The profile of the aperture may be dependent upon the access to services required through the joist.

Preferably at least one long edge is parallel with a first edge of the joist wherein the first edge is parallel with a longitudinal axis through the joist. More preferably the long edge and the first edge are not co-linear. In this way the plate need not be sized to match a joist.

Preferably a portion of the plate between the opening and an edge of the plate includes a plurality of rows of elongate punch nail holes. In this way there is a large density of punch nail holes in the plate. Advantageously a majority of a surface of the plate is covered in elongate punch nail holes.

According to a second aspect of the present invention there is provided a reinforcement plate for attachment to a dimensional lumber joist weakened by the removal of a portion of its volume; the reinforcement plate comprising a sheet-like material for placement against a generally planar surface of a joist and having a central opening therein aligned with the weakened portion of the joist, a plurality of elongate punch nail holes through the material connecting the plate to the timber and characterised in that: at least a first elongate punch nail hole is arranged at an angle with respect to at least a second elongate punch nail hole.

Preferably the reinforcement plate is according to the first aspect.

Embodiments of the present invention will now be described, by way of example only, with reference to the accompanying drawings, in which:
Figure 1 shows a schematic view of a front plan view of a joist including a reinforcement plate in accordance with a first embodiment of the present invention;
Figure 2 shows a schematic illustration of an elongate punch nail hole as may be incorporated in the invention;
Figure 3 shows a front plan view of a reinforcement plate in accordance with a second embodiment of the present invention; and
Figure 4 shows a front plan view of a reinforcement plate in accordance with a third embodiment of the present invention.

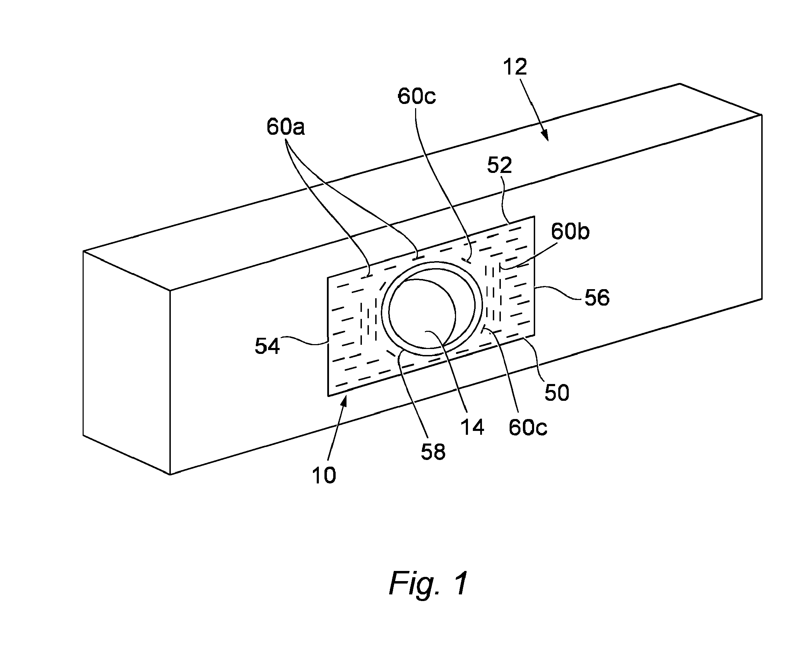

Reference is initially made to Figure 1 of the drawings which illustrates a reinforcement plate, generally indicated by reference numeral 10, located upon a dimensional lumber joist 12 having an aperture 14 arranged therethrough for the access of services or other provisions through the joist, according to an embodiment of the present invention.

Joist 12 is a dimensional lumber joist, weakened by the removal of a portion of its volume forming aperture 14. Reinforcement plate 10 is a sheet of galvanised steel having a central opening therethrough which is aligned with aperture 14.

The reinforcement plate 10 of the first depicted embodiment of Figure 1 is rectangular in shape and its boundaries are defined by contiguous inner and outer edges. The outer peripheral edge comprises: a base edge (50), a top edge (52) and first and second side edges (54, 56) connecting the base and top edges (50, 52). The inner peripheral edge is a circular edge (58) defined by a circular passage formed centrally through the reinforcement plate 10.

The reinforcement plate 10 shown in Figure 1 is provided with a plurality of spaced elongate punch nail holes (60) through the material of the reinforcement plate 10. The reinforcement plate 10 has a number of elongate punch nail holes (60a) arranged parallel with base edge 50 and also with top edge 52. The reinforcement plate 10 further has a number of elongate punch nail holes 60b arranged parallel with the side edges (54, 56) of the plate 10. Thus, the reinforcement plate 10 has a first plurality of punch nail holes 60a arranged perpendicular to a second plurality of punch nail holes 60b. This arrangement of punch nail holes in the reinforcement plate 10 is such that the common vertical and horizontal lines of weakness in the joist 12 are supported.

In the embodiment depicted in Figure 1, adjacent rows of punch nail holes 60a are staggered with respect to each other. Likewise, adjacent columns of punch nail holes 60b are staggered with respect to each other. In this way, support across both vertical and horizontal lines of weakness respectively in achieved.

Further elongate punch nail holes 60c are arranged at an angle to both the first and the second plurality of punch nail holes 60a, 60b. The angle is other than 90° such that the further punch nail holes 60c are neither perpendicular to nor parallel with any of either the first plurality of punch nail holes 60a or the second plurality of punch nail holes 60b.

The further elongate punch nail holes 60c may be at an angle of 45° to the punch nail holes 60a and/or 60b, for example. In this way, 'cross-splitting' over the joist 12 from aperture 14 is prevented.

The reinforcement plate 10 may have one or more fixture apertures distributed throughout its surface area facilitating the passage of nails, screws or other fasteners for additional fastening of the plate 10 to the surface of the dimensional lumber joist 12.

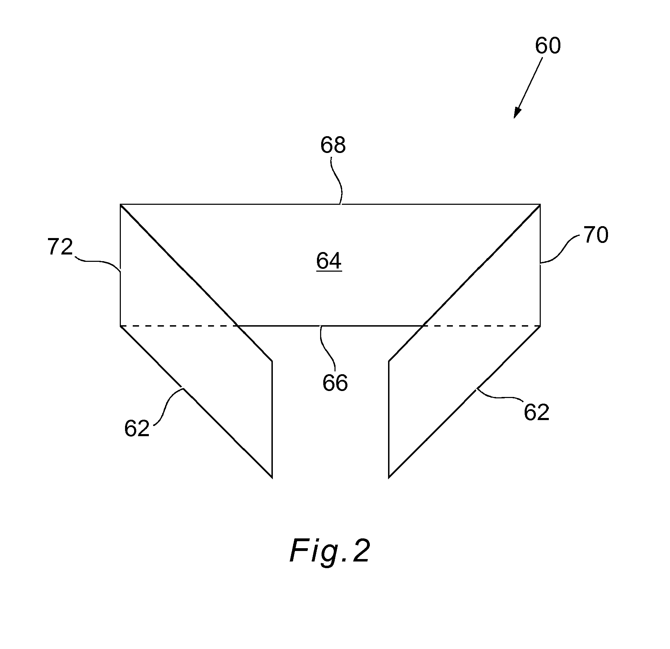

As best shown in Figure 2, the reinforcement plate 10 is provided with a plurality of elongate punch nail holes, generally indicated by the reference numeral, 60.

Each elongate punch nail hole 60 is formed by punching portions of metal out of the plane of the reinforcement plate (not shown). The resulting elongate punch nail hole 60 has spikes or barbs 62 projecting out of the plane of the reinforcement plate 10 (not shown). The spikes or barbs 62 provide a means of fastening the plate 10 to a joist. The punching out of the spikes or barbs 62 results in the formation of an elongate aperture 64 in the material of the reinforcement plate 10. The aperture 64 is delimited by base edge 66 and top edge 68 together with side edges 70, 72. In the embodiment depicted in Figure 2, the aperture 64 is rectangular.

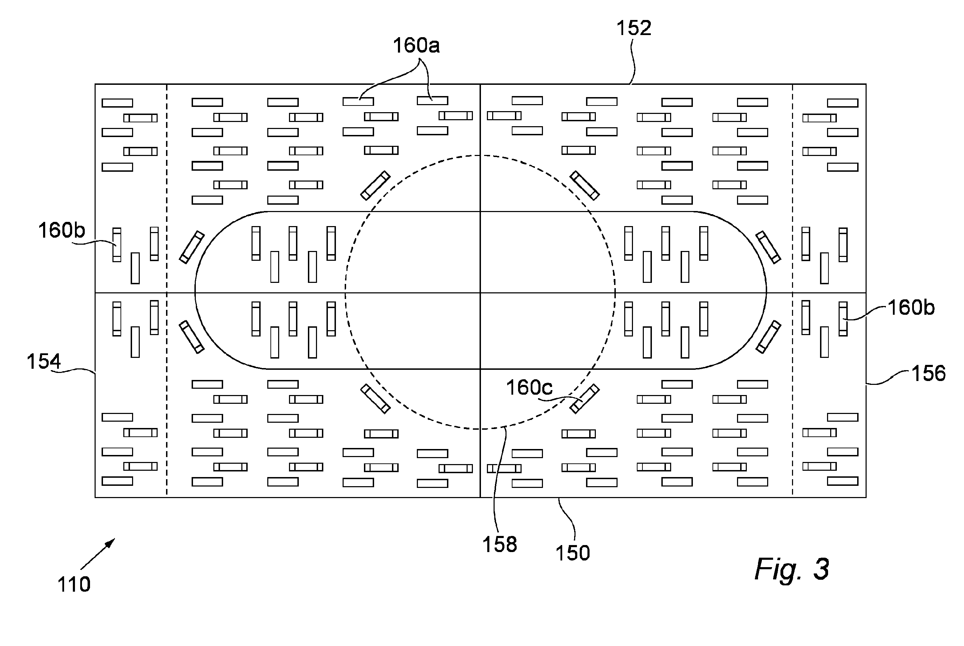

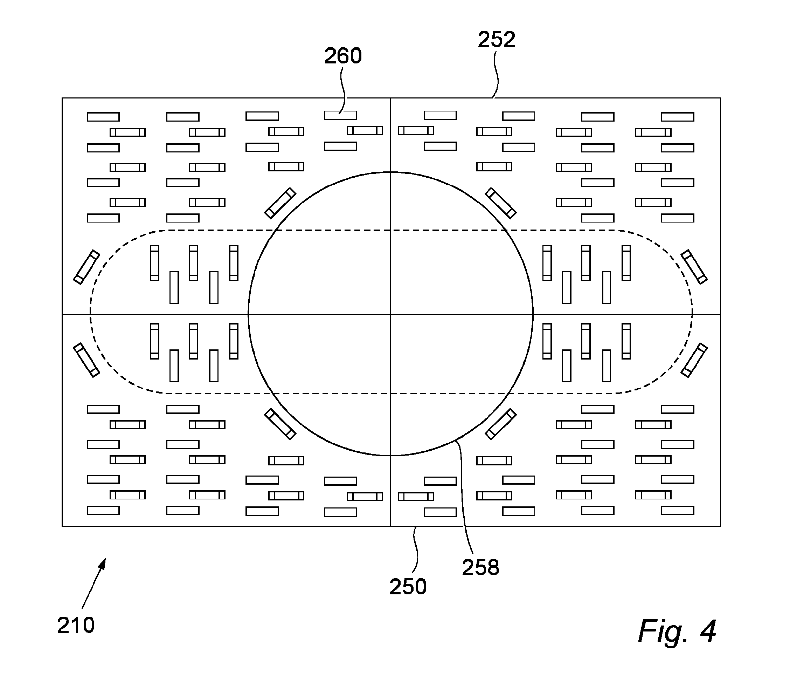

In Figure 3, features corresponding with those depicted in Figure 1 have similar reference numerals increased by 100. Likewise, in figure 4, features corresponding with those depicted in Figure 1 have similar reference numerals increased by 200.

As shown in Figure 3, reinforcement plate 110 is rectangular in shape and its boundaries are defined by contiguous inner and outer edges. The outer peripheral edge comprises: a base edge (150), a top edge (152) and first and second side edges (154, 156) connecting the base and top edges (150, 152). The inner peripheral edge is a circular edge (158) defined by a circular passage formed centrally through the reinforcement plate 110.

The reinforcement plate 110 shown in Figure 3 is provided with a plurality of spaced elongate punch nail holes (160) through the material of the reinforcement plate 110. The reinforcement plate 110 has a number of elongate punch nail holes (160a) arranged parallel with base edge 150 and also with top edge 152. The reinforcement plate 110 further has a number of elongate punch nail holes 160b arranged parallel with the side edges (154, 156) of the plate 110. Thus, the reinforcement plate 110 has a first plurality of punch nail holes 160a arranged perpendicular to a second plurality of punch nail holes 160b. This arrangement of punch nail holes in the reinforcement plate 110 is such that the common vertical and horizontal lines of weakness in a joist (not shown) are supported.

In the embodiment depicted in Figure 3, adjacent rows of punch nail holes 160a are staggered with respect to each other. Likewise, adjacent columns of punch nail holes 160b are staggered with respect to each other. In this way, support across both vertical and horizontal lines of weakness respectively in achieved.

Further elongate punch nail holes 160c are arranged at an angle to both the first and the second plurality of punch nail holes 160a, 160b. The angle is other than 90° such that the further punch nail holes 160c are neither perpendicular to nor parallel with any of either the first plurality of punch nail holes 160a or the second plurality of punch nail holes 160b.

The further elongate punch nail holes 160c may be at an angle of 45° to the punch nail holes 160a and/or 160b, for example. In this way, 'cross-splitting' over a joist (not shown) is prevented.

The reinforcement plate 110 may have one or more fixture apertures (not shown) distributed throughout its surface area facilitating the passage of nails, screws or other fasteners for additional fastening of the plate 110 to the surface of a dimensional lumber joist.

In the example illustrated in Fig. 3, the top and base edges (150, 152) are each 370 mm in length and the first and second side edges (154, 156) are each 196 mm in length.

The alternative embodiment of a reinforcement plate 210 according to the invention depicted in Figure 4, differs from that depicted in Figure 3 in that the top and base edges (250, 252) are each 300 mm in length, thereby forming a smaller and more compact plate 210 than is depicted in Figure 3. The arrangement of elongate punch nail holes 260 in Figure 4 differs from the arrangement depicted in Figure 3 in that the outermost pluralities of horizontally and vertically aligned elongate punch nail holes 160a, 160b in Figure 3, proximate the edges 154 and 156 of the reinforcement plate 110 are absent from the embodiment depicted in Figure 4.

The opening (58, 158 258) in the reinforcement plate (10, 110, 210) is centrally aligned on the plate between the edges thereof. The opening is circular in profile although it is envisaged that the opening may be elliptical in additional embodiments of the invention. In the embodiment shown in Figure 4, the circular opening 258 has a radius of 65mm.

The figures depict three different embodiments of a reinforcement plate in accordance with the present invention, each formed of a sheet of metallic material selected from the group consisting of stainless steel, galvanised steel or the like.

In use, a reinforcement plate in accordance with the invention and as depicted in any one of Figures 1, 3 and 4 is attached to a substantially planar surface of a dimensional lumber joist. The spikes or barbs (62 in Figure 2) of the elongate punch nail hole attach the reinforcement plate (10, 110, 210) to the joist such that the base edge (50) and the top edge (52) of the plate are each spaced in the depth dimension of the joist from corresponding upper and lower surfaces of the joist. This is achieved by ensuring that the height of the reinforcement plate in the depth dimension is less than the height of the joist in the height dimension. The circular edge (58) of the central opening in the plate is positioned proximate and around a locally weakened portion of the joist caused by the removal of a volume of material from a side wall of the joist. By completely surrounding a weakened portion of the joist, problems associated with fracturing and splitting along longitudinal grain lines in dimensional lumber joists are obviated. In particular, the fact that the spacing of the circular edge (58) and the respective first and second side edges (54, 56) is maximised in the longitudinal direction of the reinforcement plate means that additional strength is provided in the longitudinal direction.

It will be appreciated that the reinforcement plate of the present invention provides several important advantages over conventional designs. Most importantly, unlike prior art arrangements, the planar reinforcement plate of the present invention is dimensioned to be smaller in the height dimension than the joist to which it is attached. This provides a greater deal of flexibility insofar as the reinforcement plate is therefore largely independent of the depth dimensions of dimensional lumber joists to which it is fitted. There is therefore no need to provide a large range of reinforcement plates for use on joists of different heights. In addition, the arrangement of the elongate punch nail holes (60) formed through the reinforcement plate mean that lines of weakness in the transverse and longitudinal directions of the joist are supported.

Modifications and improvements may be made to the forgoing without departing from the scope of the present invention as defined by the claims.

## Claims

1. A dimensional lumber joist assembly comprising a dimensional lumber joist, weakened by the removal of a portion of its volume, and a reinforcement plate attached thereto; the reinforcement plate comprising a sheet-like material having a central opening therein aligned with the weakened portion of the joist, a plurality of elongate punch nail holes through the material connecting the plate to the timber and **characterised in that**: at least a first elongate punch nail hole is arranged at an angle with respect to at least a second elongate punch nail hole.

2. A dimensional lumber joist assembly according to claim 1, wherein the second elongate punch nail hole is substantially perpendicular to the first elongate punch nail hole.

3. A dimensional lumber joist assembly according to claim 1 or claim 2, wherein a plurality of first elongate punch nail holes are arranged in lines across the plate such that a long axis of each punch nail hole is parallel to a long edge of the plate.

4. A dimensional lumber joist assembly according to claim 3, wherein the first elongate punch nail holes in adjacent lines are staggered with respect to each other.

5. A dimensional lumber joist assembly according to any one of the preceding claims, wherein a plurality of second elongate punch nail holes are arranged in lines across the plate such that a long axis of each punch nail hole is parallel to a short edge of the plate.

6. A dimensional lumber joist assembly according to claim 5, wherein the second elongate punch nail holes in adjacent lines are staggered with respect to each other.

7. A dimensional lumber joist assembly according to any one of the preceding claims, wherein further elongate punch nail holes are arranged at an angle to the first and/or second punch nail holes.

8. A dimensional lumber joist assembly according to any one of the preceding claims, wherein the long edges and the short edges of the reinforcement plate form a polygon of four sides.

9. A dimensional lumber joist assembly according to any one of the preceding claims, wherein the opening is an aperture located substantially centrally on the plate.

10. A dimensional lumber joist assembly according to claim 9, wherein the aperture is circular in profile.

11. A dimensional lumber joist assembly according to claim 9, wherein the aperture is elliptical in profile.

12. A dimensional lumber joist assembly according to any one of the preceding claims, wherein at least one long edge of the plate is parallel with a first edge of the joist wherein the first edge is parallel with a longitudinal axis through the joist.

13. A dimensional lumber joist assembly according to claim 12, wherein the long edge of the plate and the first edge of the joist are not co-linear.

14. A dimensional lumber joist assembly according to any one of the preceding claims, wherein a portion of the plate between the opening and an edge of the plate includes a plurality of rows of elongate punch nail holes.

15. A reinforcement plate for attachment to a dimensional lumber joist weakened by the removal of a portion of its volume; the reinforcement plate comprising a sheet-like material for placement against a generally planar surface of a joist and having a central opening therein aligned with the weakened portion of the joist, a plurality of elongate punch nail holes through the material connecting the plate to the timber and **characterised in that**: at least a first elongate punch nail hole is arranged at an angle with respect to at least a second elongate punch nail hole.
